# EUROPEAN PATENT APPLICATION

(11) **EP 4 290 152 A1**
(43) Date of publication of application: **13.12.2023**
(21) Application number: 23177123.9
(22) Date of filing: 02.06.2023
(51) Int. Cl.: F24F 12/00, F24F 13/20

(54) **VENTILATION UNIT WITH HOUSING**

(30) Priority: 07.06.2022 BE 202205442
(71) Applicant: Wilms NV, 2450 Meerhout (BE)
(72) Inventor: WILMS, Erik Albert Elisa, 2400 MOL (BE)
(74) Representative: Arnold & Siedsma

(57) **Abstract**

A ventilation unit (10) configured to be built into a wall of a building, the ventilation unit comprising a heat exchanger (40) and a housing assembly which comprises a first housing part (100) and a second housing part (200) which are mutually connectable and shape-compatible, wherein the first housing part (100) and the second housing part (200) are configured to each form at least a portion of a first channel (20; 120, 220) for allowing air to flow from outside to inside the building, a second channel (30; 130, 230) for allowing air to flow from inside the building to outside, and a heat exchanger accommodation (140, 240) configured to accommodate the heat exchanger (40).

## Description

The invention relates to a ventilation unit. The invention further relates to an assembly of a screen device and a ventilation unit. The invention further relates to a building with a ventilation unit.

Home ventilation is becoming increasingly important. In the past, homes were ventilated mainly passively. Ventilation openings were typically provided for this purpose near windows in order to allow fresh air to flow into a space. The ventilation opening can here comprise a flap which can be operated manually or automatically in order to influence the amount of air which can flow through the ventilation channel. Self-regulating flaps thus exist which, depending on the difference between the air pressure outside and the air pressure inside, for instance as a result of wind, open to greater or lesser extent. A known drawback of such ventilation openings is that heat is not recuperated.

Other ventilation systems have been devised, such as a balance ventilation system, wherein the ventilation is actively controlled by allowing controlled inflow and outflow of air, wherein the inflow and outflow are held in balance by the balance ventilation system. Such a balance ventilation system typically comprises heat exchangers which allow heat exchange between the ingoing air and the outgoing air so as to thus ventilate in energy-efficient manner. A drawback of such a system is that a modified pipe network must be provided through the whole building in order to ventilate each space correctly. This is time-consuming and expensive, and for practical reasons often impossible in the case of renovation.

EP17171461 describes a local ventilation unit which can be built into a cavity. With this ventilation unit the airflow can be controlled, heat can be recuperated and it is no longer necessary to provide a modified pipe network throughout the whole building. A further advantage is that this ventilation unit is fully concealed in the wall and will therefore not cause any aesthetic disruption in the space. A drawback of this construction is related on one hand to production thereof. It is difficult to produce this ventilation unit in cost-efficient manner. On the other hand the construction of this ventilation unit is sub-optimal, whereby it is time-consuming to perform maintenance and repairs.

It is an object of the invention to provide a ventilation unit which can be produced in cost-efficient manner and on which maintenance and repairs can be performed more easily.

The invention provides for this purpose a ventilation unit configured to be built into a wall of a building according to claim 1. The ventilation unit comprises a heat exchanger and a housing assembly which comprises a first housing part and a second housing part which are mutually connectable and shape-compatible. The first housing part and the second housing part are configured to each form at least a portion of a first channel for allowing air to flow from outside the building to inside, a second channel for allowing air to flow from inside the building to outside, and a heat exchanger accommodation configured to accommodate the heat exchanger.

A first and a second mutually shape-compatible and connectable housing part is understood to mean that the first housing part is formed correspondingly so as to interconnect to the second housing part. The first and the second housing part together form the housing assembly. Such a housing assembly has multiple advantages. On one hand, the flexibility in the manufacture thereof increases considerably. This is because the first and the second housing part are considerably easier to manufacture individually, for instance using rotational moulding or injection moulding in a simple mould. This considerably reduces the production costs and time of the ventilation unit. The shape-compatibility and mutual connectability of the housing parts further has the advantage that both the assembly and maintenance can be performed in considerably simpler manner. The mutual shape-compatibility thus allows the first housing part to be connectable to the second housing part in simple manner during assembly. The mutual shape-compatibility reduces the chances of an installer connecting the first and the second housing part to each other in the wrong way. This advantage also extends to maintenance of the ventilation unit. The ventilation unit thus also has the advantage that maintenance thereof is very simple. The first and the second housing part can for instance be released from each other in simple manner in order to carry out maintenance on the first and the second channel and to dismantle for instance functional modules, such as an air pump or filter and so on, from the housing assembly. Air can further be ventilated in a space lying adjacently of the ventilation unit, and heat can be exchanged between inflowing fresh air and outflowing contaminated air via the heat exchanger. This enables energy recuperation in order to make the ventilation unit energy-efficient.

The first channel and the second channel extend here between the first and the second housing part, from respectively a suction opening to an outlet opening. In this way the first and the second channel are bounded by both the first and the second housing part. This further also has the advantage that when a component of the first or the second housing part is damaged, for instance a portion of the first channel in the first housing part is damaged, only the first housing part need be replaced or repaired.

The suction opening and the outlet opening of the first channel and the second channel are positioned as follows:
the outlet opening of the first channel is provided in a lower segment of the ventilation unit, and the suction opening of the second channel is provided in an upper segment of the ventilation unit. The suction opening of the first channel is further provided at the position of an upper segment of the ventilation unit, and the outlet opening of the second channel is provided at the position of a lower segment of the ventilation unit.

Condensation problems are hereby prevented in ingenious manner. More specifically, this advantage is based on the insight that outside air is typically drier compared to inside air, particularly during cold periods such as winter. The inverse is also typical, inside air thus typically being moister and warmer during cold periods than the outside air. Because the suction opening of the first channel is provided at the position of an upper segment, fresh, cold outside air is always drawn in at the top, heated gradually and then delivered to an interior space. Hot, moist, inside air is cooled by the heat exchanger and then blown out at the position of the outlet opening in the lower segment. In this way condensation can result only at the position of the lower segment. Because the outlet opening is positioned below the suction opening, the condensate is also unable to flow into the suction opening.

The ventilation unit further comprises a first air pump in the first channel and a second air pump in the second channel, and the first housing part comprises a first air pump accommodation and a second air pump accommodation which are configured to accommodate respectively the first air pump and the second air pump. In this way air can be refreshed in the space via the channels and heat can be exchanged between inflowing fresh air and outflowing contaminated air via the heat exchanger. Such a ventilation unit is therefore also referred to as balanced ventilation unit. A ventilation unit can be given a continuous or intermittent form with a heat exchanger which exchanges heat directly between two airflows or which exchanges heat indirectly by absorbing heat from a first flow and relinquishing it to a second flow. In an intermittent system one air pump can be used to intermittently realize an airflow in the one and in the other direction. The amount of inflowing air and the amount of discharged air can be controlled via the air pumps. By controlling these amounts at a predetermined ratio a slight overpressure or a slight underpressure in the space can be obtained, which may be desirable on the basis of circumstances, type of space and safety.

The first housing part and the second housing part preferably each form on a first side a portion of the suction opening of the first channel and a portion of the outlet opening of the second channel, such that the suction opening and outlet opening are wholly formed when the first housing part and the second housing part are connected to each other. This allows the first and the second housing part to be oriented and aligned relative to each other in extremely simple manner during assembly of the housing assembly, this further simplifying the assembly. The first side is more preferably configured to lie substantially parallel to a reveal of an opening in the wall. The first side is therefore parallel to the reveal. This means that the suction opening and the outlet opening allow air to flow into and out of the reveal on the first side. In this way the ventilation unit can thus be integrated in a cavity in relatively simple manner.

The first housing part and the second housing part are preferably formed so that the first channel and the second channel each extend at an oblique angle relative to the first side from respectively the suction opening of the first channel and the outlet opening of the second channel, so that first and the second channel cross each other at the position of the heat exchanger accommodation. This allows condensation to run off in improved manner. At least one of the first and the second housing part more preferably comprises a recess in a lower wall of the second channel, at the position of the outlet opening, so that when the first and the second housing part are mutually connected, a condensation discharge channel is formed in the lower wall by the recess. Condensate formed in the second channel is dischargable in this way. This improves the discharge of condensation further. The first channel and the second channel cross each other in this way. The second housing part more preferably comprises the outlet opening of the first channel and the suction opening of the second channel. The heat exchanger is preferably provided at the position of the crossing. More preferably, the second housing part comprises a second side which lies at right angles to the first side and which is configured to lie parallel to the wall, and the second side comprises the outlet opening of the first channel and the suction opening of the second channel. This allows the ventilation unit to be connected to an interior space in simple manner. A passage opening need only be made in the wall in order to connect the outlet opening and the suction opening to the interior space.

The first channel and the second channel preferably each extend substantially linearly between the heat exchanger accommodation and respectively the first air pump accommodation and the second air pump accommodation. The advantage hereof is based on the insight that sudden changes in direction of the channel or sharp edges in an air channel may result in the production of sound. It is suspected that this is related to an air turbulence generated in the channel. This sound typically causes nuisance in the space. Giving the channels a substantially linear form reduces these problems and increases the comfort of a person in the space. More preferably, the first channel extends substantially linearly between the first air pump accommodation and the outlet opening of the first channel, and the second channel extends substantially linearly between the second air pump accommodation and the suction opening of the second channel. The first air pump accommodation and the second air pump accommodation more preferably each have an air pump accommodation opening and outlet which are oriented substantially at right angles to each other. The first and the second air pump are more preferably a centrifugal fan. The advantage hereof is that the bend in the first and/or the second channel is formed at the position of the air pump accommodation. The air pump itself will by definition produce sound, making it less critical for the channels to take a linear form at the position of the air pump. The second housing part is preferably configured to lie adjacently of an inner wall. In a modern home a window is usually placed on the inner wall. This causes the reveal to lie substantially outside, and an opening at the reveal will also be located on the outer side of the home. In such a situation the second housing part will be the side which lies against the inner wall and openings in this side will typically carry air through the inner wall via extension pieces, for instance pipe pieces, and so allow air to flow into and out of the space.

The first housing part and the second housing part preferably form at the position of the suction opening of the first channel a first valve housing which is configured to accommodate a first valve which allows the first channel to be closed.

The first housing part and the second housing part preferably form at the position of the outlet opening of the second channel a second valve housing configured to accommodate a second valve which allows the second channel to be closed. This allows a valve to be provided so that the amount of air which can flow through the channel can be influenced. The valve can also function as shut-off valve of the first or second channel in order to for instance prevent outside air from flowing in at extremely cold temperatures.

The first channel and the second channel are preferably functionally separated from each other by the first housing part, the second housing part and the heat exchanger when the first housing part and the second housing part are mutually connected.

The first housing part and the second housing part preferably form a watertight outer shell of the ventilation unit. By forming a watertight outer shell functional elements, such as for instance the air pump, are shielded from the surrounding area as it is present in the cavity.

Each of the first housing part and the second housing part are preferably respectively integrally formed.

The first housing part and/or the second housing part are preferably configured to comprise one or more sensors which are able to measure a parameter associated with the air. This allows implementation of a controlling to be performed on the basis of the parameters.

The ventilation unit preferably comprises a grating for allowing an airflow from and to the ventilation unit and to prevent torrential rain from entering directly into the housing assembly. The grating more preferably comprises throughfeed channels arranged in the grating. The plurality of throughfeed channels more preferably have a length with a longitudinal direction extending at an angle relative to a frontal plane of the grating. The angle is more preferably at least 15°, preferably at least 20°, more preferably at least 30°, for instance 35°. The angle is more preferably a maximum of 50°, preferably a maximum of 45°, more preferably a maximum of 40°, for instance 35°. The plurality of throughfeed channels preferably each have a hexagonal cross-section. More preferably, each of the plurality of throughfeed channels has a cross-sectional area of at least 1 mm². The grating is preferably provided at least at the position of the suction opening of the first channel.

According to a further aspect, the invention provides an assembly of a screen device and a ventilation unit as described above, wherein the screen device comprises a screen roller and a screen which is rollable onto and unrollable from this screen roller and is attached to the screen roller on one of its sides, wherein the screen device comprises at least a protective casing and two lateral guides, wherein the ventilation unit is connected to a first lateral guide of the two lateral guides.

The invention will now be further described with reference to an exemplary embodiment shown in the drawing.

In the drawing:
figure 1 is a perspective front view of an exemplary embodiment of a ventilation unit according to the invention;
figure 2 is a perspective rear view of the exemplary embodiment according to figure 1;
figure 3 is a perspective exploded view of an exemplary embodiment of the ventilation unit;
figure 4 is an isometric schematic representation of an exemplary embodiment of the ventilation unit;
figure 5 is an exploded view of a ventilation unit according to an embodiment; and
figure 6 is a lying cross-section of a wall at the position of the ventilation unit and the wall passage.

The following detailed description relates to determined specific embodiments. The teaching hereof can however be applied in different ways. The same or similar elements are designated in the drawings with the same reference numerals.

The present invention will be described with reference to specific embodiments. The invention is however not limited thereto, but solely by the claims.

As used here, the singular forms "a" and "the" comprise both the singular and plural references, unless clearly indicated otherwise by the context.

The terms "comprising", "comprises" and "composed of' as used here are synonymous with "including". The terms "comprising", "comprises" and "composed of' when referring to stated components, elements or method steps also comprise embodiments which "consist of" the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate circumstances and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. Although some embodiments or aspects described here comprise some but no other features which are included in other embodiments or aspects, combinations of features of different embodiments or aspects are further intended to fall within the context of the invention and to form different embodiments or aspects, as would be apparent to the skilled person. In the appended claims all features of the claimed embodiments or aspects can for instance be used in any combination.

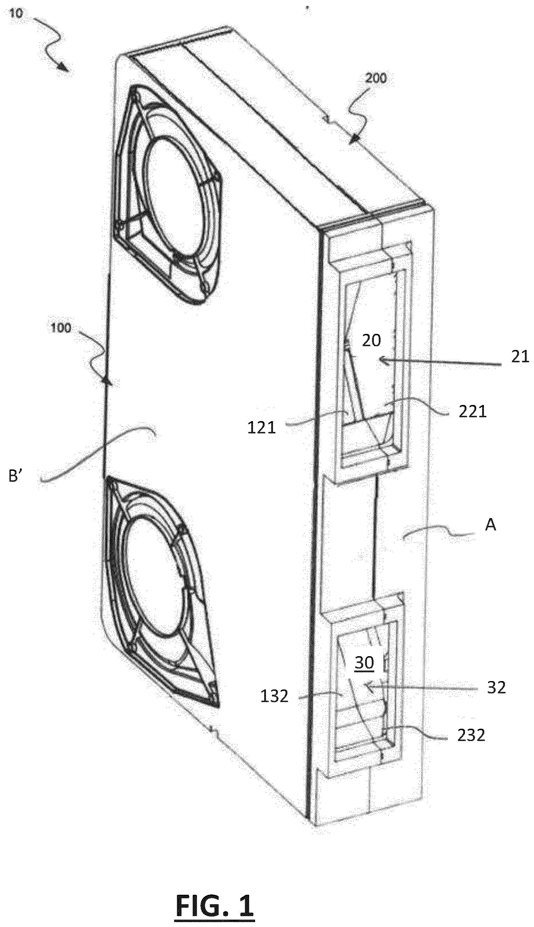

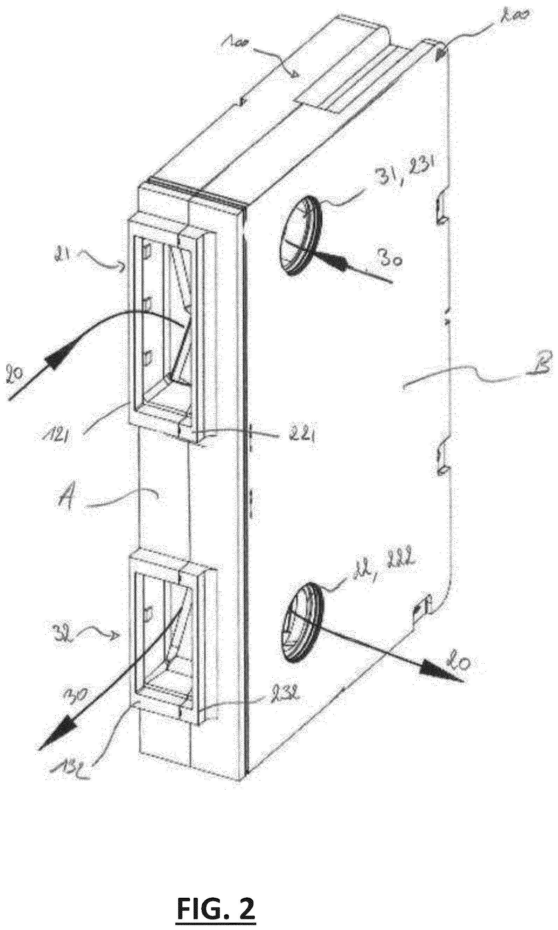

Figures 1 and 2 show respectively a perspective front view and perspective rear view of an exemplary embodiment of a ventilation unit 10. Both perspective views shown here the first side A. Ventilation unit 10 allows a forced controlled airflow from inside to outside a building and from outside the building inside through a wall (not shown). For this purpose ventilation unit 10 is configured to be built into the wall of the building. Ventilation system 10 can be deemed a local ventilation system. A plurality of such ventilation units 100 can be placed close to a plurality of respective rooms of a building in order to together form a ventilation system (not shown) of the building. Each ventilation unit 100 is provided here for the purpose of refreshing air in one space, and this ventilation unit 100 is referred to as a local unit. This in contrast to a central unit which, functionally speaking, is provided centrally in order to ventilate a plurality of spaces, optionally separately or simultaneously. Ventilation unit 10 preferably forms part of such a ventilation system. Because each ventilation unit 10 of the ventilation system operates individually, the ventilation system can be explained in this description by describing the operation of one ventilation unit. It will be apparent here that, while a plurality of ventilation units 10 can operate independently, the skilled person can couple them operatively in order to obtain a predetermined operational interaction between the different ventilation units 10 in the ventilation system.

Ventilation unit 10 comprises a housing assembly. Ventilation unit 10 is preferably further provided with a casing which is adapted to be provided fixedly in a cavity of a building. Provided fixedly is understood to mean that the casing cannot be removed without carrying out extensive work. Such extensive work is often at least partly destructive and requires for instance demolition of a part of a wall.

The housing assembly is formed by a first housing 100 and a second housing part 200. This first housing part 100 and second housing part 200 in connected state fits in the casing and can be inserted therein and removed therefrom without any extensive work. The housing assembly thus comprises a first and a second housing part 100, 200. It will be apparent here that more than two housing parts, for instance a first housing part 100, a second housing part 200 and a third housing part (not shown), can be provided. It is however preferred that the number of housing parts remain limited, for the sake of the simplicity and speed of assembly of the ventilation unit 10.

The housing assembly has a first side A which preferably has an upright orientation. In mounted state the first side A is oriented parallel to a reveal. In the context of this application a reveal is described as follows. When an opening is provided in a wall, the reveal is also formed. The reveal is defined as a straight, chamfered or profiled inner side of a window opening, gate opening or arch opening, which inner side preferably lies transversely or substantially transversely of the wall. The reveal is preferably always perpendicular to the wall. In practice the first side A preferably lies substantially in line with the reveal. It will however also be apparent to the skilled person that the first side A may lie parallel to and at a distance from the reveal, for instance 20 cm from the reveal. In this situation said distance is preferably smaller than 15 cm, more preferably smaller than 10 cm.

In this description the terminology 'forming a portion of a channel' is defined as a portion of the inner wall of the channel being shaped directly. This means that when a housing part forms a portion of a channel, this housing part directly shapes and forms a portion of the inner wall of the channel.

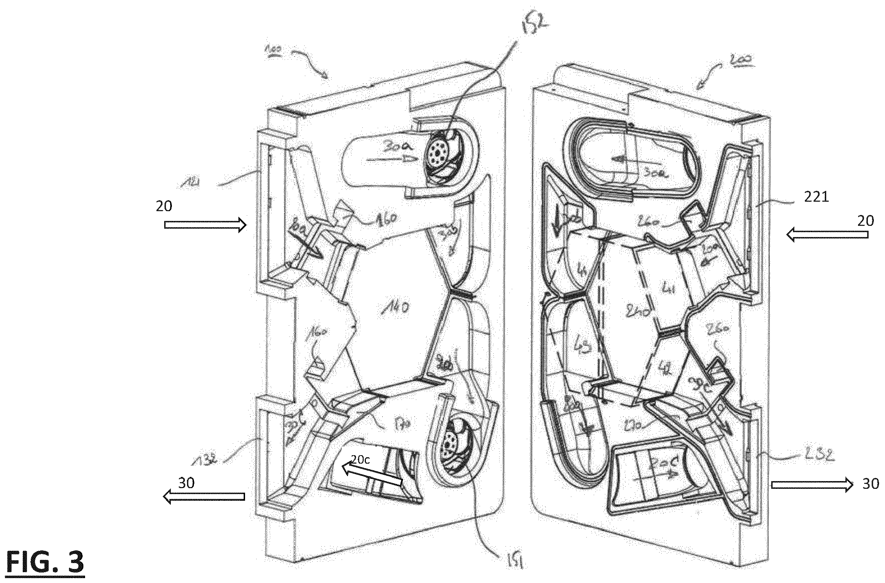

The first housing part 100 and the second housing part 200 are mutually connectable and shape-compatible. Shape-compatible is understood to mean that the first housing part 100 is formed correspondingly relative to the second housing part 200 and interconnects thereto. The first housing part 100 and the second housing part 200 together form the housing assembly, particularly when they are connected to each other. The first housing part 100 and the second housing part 200 are configured to each form at least a portion of a first channel 20, to form at least a portion of a second channel 30 and to form at least a portion of a heat exchanger accommodation, see figure 3. Visible in the figure is a suction opening 21 of first channel 20 and an outlet opening 32 of second channel 30. In figure 1 the first housing part 100 and the second housing part 200 each form roughly one half of the housing assembly. It will be apparent to the skilled person that each of the first and the second housing part can form a smaller or larger portion of the housing assembly. The first and the second housing part preferably each define at least 30% of an overall thickness of the housing assembly, preferably at least 40%, more preferably at least 45% of the overall thickness of the housing assembly, wherein the combination of the first and the second housing part further forms at least 90%, preferably at least 95%, more preferably substantially 100% of the overall thickness of the housing assembly. According to the shown exemplary embodiment, the first housing part 100 bounds for instance a first half of the first channel, for instance a left-hand half as shown in figure 1. According to this embodiment, the second housing part 200 bounds a second half of the first channel, for instance the right-hand half as shown in figure 1.

The first housing part 100 and the second housing part 200 thus together form the first channel 20 and the second channel 30. This means that at multiple locations of each of the first channel 20 and second channel 30, preferably over at least 20%, more preferably over at least 30%, most preferably over at least 50% of the length of each of first channel 20 and second channel 30, the inner wall of the channel is in cross-section formed substantially wholly by a combination of the first housing part 100 and the second housing part 200. First channel 20 is configured to allow air to flow from outside the building to inside and second channel 30 is configured to allow air to flow from inside the building to outside, or vice versa. Terms such as suction opening and outlet opening will be used in the description below, wherein it will be apparent that when the flow direction of the air in the first channel and the second channel is reversed relative to the shown example, the terms suction opening and outlet opening must also be reversed.

Each housing part according to the invention is preferably a substantially block-shaped material in one piece, preferably formed from a hard foam material such as EPP, preferably with better heat-insulating properties than air. The block-shaped material has two opposite sides, a first side of which is substantially flat and a second side of which is highly profiled. In mounted state the first side forms an outer side of the assembly of first housing part and second housing part. This first side is designated in the figures with side B and B'. The second side is highly profiled, i.e. in mounted state directly forms the air channels and fitting spaces or openings for accommodating specific components and sensors including fans and heat exchanger. In the figures this second side is only shown in figure 3. The form of this second side is a negative of the air channels and specific components and sensors. By placing two such housing parts onto each other a functional module of a ventilation unit is obtained in which channels, fans, sensors and heat exchanger are contained between two opposite first sides of the respective housing parts. A further advantage, particularly when such a ventilation unit is provided in the cavity of a wall, is that heat-insulating material is used for the housing parts. This limits the negative impact of the cavity not being filled completely with heat-insulating materials in conventional manner.

First channel 20 and second channel 30 extend through the first housing part 100 and the second housing part 200, between a respective suction opening and outlet opening. This means that first channel 20 extends from a first suction opening 21 to a first outlet opening 22, see figure 2. This further means that second channel 30 extends from a second suction opening 31, see figure 2, to a second outlet opening 32. In the exemplary embodiment first suction opening 21 and second outlet opening 32 are provided in the first side A of the housing assembly, and are preferably each formed at least partially by the first housing part 100 and the second housing part 200. The first housing part 100 and the second housing part 200 thus each form a portion of the suction opening 21 of first channel 20 and each form a portion of the outlet opening 32 of second channel 30. In other words, the first housing part 100 has a first suction opening portion 121 and a second outlet opening portion 132, and the second housing part 200 has a first suction opening portion 221 and a second outlet opening portion 232. The first suction opening portion 121 and the second outlet opening portion 132 of the first housing part 100, and the first suction opening portion 221 and the second outlet opening portion 232 of the second housing part 200 are respectively shape-compatible so as to form respectively the first suction opening 21 and the second outlet opening 32. Fresh air can be drawn in from outside along first suction opening 21, and be carried inside via first channel 20. Inside air can be discharged outside along the second outlet opening 32, via second channel 30.

Figure 2 further shows that the housing assembly has a second side B which is preferably configured to lie parallel to a wall (not shown). The second side B forms an upright outer wall of the housing assembly and preferably lies at right angles to the first side A. The second side B is formed substantially wholly by the second housing part 200. Figure 1 shows a second side B' of the first housing part, which lies opposite the second side B of the second housing part 200. These second sides B, B' preferably lie parallel to each other. The distance between the second sides B, B' determines the thickness of the housing assembly. This thickness is preferably equal to the width of the first side A. The thickness is preferably a maximum of 300 mm, preferably a maximum of 250 mm, more preferably a maximum of 210 mm. Such a thickness allows the whole ventilation unit to be placed between an inner shell and an outer shell of the wall.

The second housing part 200 comprises in the second side B the second suction opening 31 and the first outlet opening 22 of respectively the second channel 30 and the first channel 20. The second side B here preferably lies against an inner wall when a window is mounted in or at the inner wall, and preferably lies against the outer wall when the window is mounted in or at the outer wall. Hereby, one of the first side A and second side B will in each case face outward and another of the first side A and second side B will face inward. This allows the ventilation unit to be connected to an interior space in simple manner. A passage opening need only be made in one of the inner wall and outer wall in order to connect particularly the first outlet opening 22 and the second suction opening 31 to the interior space. Air is supplied and discharged via the reveal via openings 21 and 32 so that no further openings need be provided in the other of the inner wall and outer wall. It will further be apparent to the skilled person that a respective housing part can also form a suction opening and/or outlet opening of the first and/or the second channel on its own, see for instance the above stated second suction opening 31 and first outlet opening 22 in the second housing part 200. The first suction opening 21 and second outlet opening 32 can alternatively also be formed exclusively by the first housing part. It will further also be apparent that in such an alternative embodiment the first suction opening 21 and second outlet opening 32 can be provided in a side B' lying opposite the second side B. In this embodiment a passage opening must be made in the outer wall (not shown) in order to connect the first suction opening 21 and the second outlet opening 32 to the interior space. Further variations are possible, for instance by mirroring the first and second housing part in order to construct a ventilation unit which, as seen from inside to outside and with the window mounted in the inner wall, as shown in the figures, can be provided to the right of a window or, in mirrored version, can be built in to the left of the window. Further variations are possible wherein the second side B is provided parallel to a ceiling while the first side A borders the outside via channels and/or directly.

According to the exemplary embodiment shown in figures 1 and 2, suction opening 21 of first channel 20 is situated at the position of an upper segment of ventilation unit 10. The outlet opening 32 of second channel 30 is situated at the position of a lower segment of ventilation unit 10. It will be apparent that the upright orientation of ventilation unit 10 is important in this context. The exemplary embodiment shown in figures 1 and 2 is for instance highly advantageous in use on a right-hand side of a window, as seen from the inside. When there is however insufficient space on the left-hand side of the window, the ventilation unit can be rotated such that the outlet opening becomes the suction opening, and vice versa. This advantage will be further elucidated with reference to figure 3. Because suction opening 21 of the first channel is provided at the position of an upper segment of the ventilation unit, and the outlet opening 32 of the second channel is provided at the position of a lower segment of ventilation unit 10, condensation problems are prevented in ingenious manner. More specifically, this advantage is based on the insight that outside air is typically drier compared to inside air, particularly during cold periods such as winter. Moreover, inside air is typically moister and warmer during cold periods than the outside air. Because suction opening 21 of first channel 20 is provided at the position of an upper segment, fresh, cold outside air is always drawn in at the top, heated gradually and then delivered to the interior space. Hot, moist, inside air is cooled by the heat exchanger 40, see figure 3, and then blown out at the position of the outlet opening 32 in the lower segment. In this way condensate can result almost only at the position of the lower segment, since the warm, moist air is there after all cooled so that condensation occurs. Because the outlet opening 32 is positioned below the suction opening 21, the condensate cannot flow into the suction opening. The fan is further preferably provided in the second channel, between suction opening 30 and the heat exchanger. This is opted for in order to keep condensate, which is typically situated in the heat exchanger and between the heat exchanger and outlet opening 32, away from the fan to maximum extent.

Figure 3 shows a perspective exploded view of an exemplary embodiment of ventilation unit 10. More specifically, figure 3 shows the internal parts of the ventilation unit 10 shown in figures 1 and 2.

Figure 3 shows that the first housing part 100 and the second housing part 200 are configured to each form at least a portion of a first channel 20, to each form at least a portion of a second channel 30 and to each form at least a portion of a heat exchanger accommodation 140, wherein the heat exchanger accommodation 140 is configured to accommodate a heat exchanger 40. The heat exchanger is illustrated in a state in which it is installed in the second housing part 200.

Figure 3 shows that at least partially forming the first and the second channel and the heat exchanger accommodation by the first and the second housing part 100, 200 is realized by providing a recess in the material from which first and second housing part 100, 200 are formed. Each of the first housing part and the second housing part are preferably respectively integrally formed. This can be realized using injection moulding or rotational moulding. In this way the first and the second housing part 100, 200 form a shell around an open space which forms the first and the second channel and the heat exchanger accommodation. First housing part 100, second housing part 200 and heat exchanger 40 here preferably functionally separate the first channel 20 and the second channel 30 from each other when the first housing part and the second housing part are mutually connected. In this way the airflows do not mix to any considerable extent in ventilation unit 10 and the ventilation unit can thus refresh air and function energy-efficiently in improved manner.

The heat exchanger accommodation 140 is preferably positioned substantially centrally in ventilation unit 10, preferably at the position of a crossing between the first and the second channel 20, 30. The heat exchanger accommodation 140 is configured to accommodate a heat exchanger which completes first channel 20 and second channel 30 and makes them cross each other. For this purpose heat exchanger 40 is configured to allow crosswise flow of the airflows relative to each other in a manner such that heat exchange between the flows is optimized. First channel 20 initially extends from the first suction opening, formed by the first suction opening portion 121, 221 of respectively the first and the second housing part 100, 200, up to a first air inlet 41 of heat exchanger 40. Fresh air can flow via first channel 20, through first air inlet 41 to a first air outlet 43 of heat exchanger 40. Heat exchanger 40 further has a second air inlet 44 and a second air outlet 42. Inside air flows via second channel 30, through second air inlet 44 to the second air outlet 42 of heat exchanger 40. At the position of second air outlet 42 the inside air debouches at the position of the outlet opening 32 formed by outlet opening portion 132, 232 of first and second housing part 100, 200. Heat exchanger 40 is of the air-air type, so that heat exchange is possible between a first airflow in first channel 20 and a second airflow in second channel 30. Air-air heat exchangers are known and the details of this heat exchanger are therefore not described in any further detail in this description. In heat exchanger 40 energy is exchanged between the air flowing in first channel 20 on the one hand and the air flowing in second channel 30 on the other. Heat or cold can thus be recuperated.

Figure 3 shows that the first housing part 100 and the second housing part 200 are preferably configured so that first channel 20 and second channel 30 extend at an oblique angle from respectively suction opening 21 of first channel 20 and the outlet opening 32 of second channel 30, so that first and second channel 20, 30 cross each other at the position of the heat exchanger accommodation 140. An angle is understood to mean an angle between the primary flow direction in first channel 20 and second channel 30 relative to the plane of side A. First channel 20 extends from first suction opening 21, 121, 221 in downward and oblique direction to heat exchanger 40, more specifically the first air inlet 41 of the heat exchanger. Second channel 30 extends from second air outlet 42 of heat exchanger 40 in downward and oblique direction to the second outlet opening 32, 132, 232. This allows condensation to run off in improved manner. In order to further improve the discharge of condensation one of the first and the second housing part comprises a recess 270 in a lower wall of second channel 30, at the position of the outlet opening 32 thereof, so that when the first and the second housing part are mutually connected, a condensation discharge channel is formed in the lower wall so that condensate which is formed in second channel 30 is dischargeable.

Ventilation unit 10 can further comprise a first air pump 51 in first channel 20 and a second air pump 52 in second channel 30. For this purpose the first housing part 100 comprises a first air pump accommodation 151 and a second air pump accommodation 152 which are configured to accommodate respectively the first air pump 51 and the second air pump 52. The flow of the air through first channel 20 is driven by first air pump 51. The flow of air through second channel 30 is driven by second air pump 52. First air pump 51 and second air pump 52 are preferably identical air pumps and can be driven synchronously or individually depending on the operational preferences for ventilation unit 10. Each air pump 51, 52 is preferably formed by means of an air pump producing minimal sound. An air pump is preferably opted for here which operates at a low rotational speed when displacing an air volume of 75 cubed metres per hour. A low rotational speed is defined here as a rotational speed lower than 1700 revolutions per minute (rpm), preferably lower than 1500 rpm, more preferably lower than 1200 rpm. Air pumps 51, 52 can be selected from air pumps which move air in an axial direction or in a radial direction, axial and radial being understood to mean relative to the primary rotation axis of the fan. Air pumps 51, 52 are preferably provided for radial displacement of air. First and second air pump 51, 52 are preferably a centrifugal fan. Air pumps, including fans with radial or axial blades, are known and therefore not described in further detail in this description. The first air pump accommodation 151 and the second air pump accommodation 152 each have an air pump accommodation opening and outlet which are oriented substantially at right angles to each other so that a radial air pump is installable in simple manner.

Figure 3 shows that first housing part 100 and second housing part 200 can form a first valve housing 160, 260 at the position of suction opening 21 of the first channel. Valve housing 160, 260 is configured to accommodate a first valve (not shown) which allows the first channel to be closed. This allows valves to be provided so that the amount of air which can flow through first channel 20 can be influenced, for instance in order to control a flow rate of incoming fresh air. The valve can also function as shut-off valve of the first channel in order to prevent outside air from flowing inside, for instance at extremely cold temperatures, or to prevent dirt or vermin from being able to enter the channel when the ventilation unit is idle. First housing part 100 and second housing part 200 can further also form at the position of outlet opening 132, 232 of the second channel a second valve housing which is configured to accommodate a second valve which allows the second channel to be closed. The advantages of the first valve apply mutatis mutandis to the second valve.

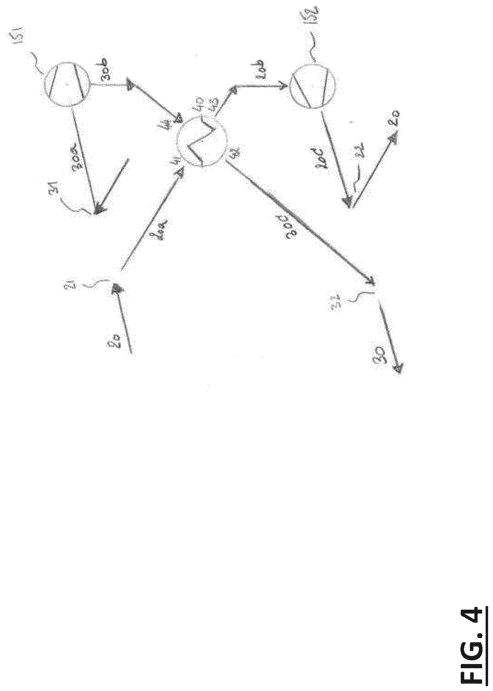

Figure 4 shows an isometric schematic diagram of the orientation of portions of the first and the second channel 20, 30. Figure 4 shows that the ventilation unit can be constructed highly compactly by determining the positions of portions of the first and the second channel in the first and the second housing part in ingenious manner, wherein user comfort is furthermore also preserved. Where figure 4 shows the principle thereof, figure 3 shows a practical implementation example of the principle.

Figures 3 and 4 show that the first channel and the second channel can be constructed from a plurality of substantially linear pieces. It is noted that substantially linear pieces is understood to mean that the channel extends substantially linearly between an inlet and an outlet thereof, for instance between first air inlet 43 and the air inlet of air pump accommodation 152. The channel may have a bend at the position of the air inlet or air outlet, for instance at the position of the outlet opening 22 of first channel 20. The only notable change in direction of the airflow in each of the channels in the ventilation unit is preferably located at the position of the air pump accommodation. Figure 3 shows that airflow in first channel 20 flows substantially linearly between air inlet 21, 121, 221 and air pump 151, via the heat exchanger. At air pump 151 the airflow changes direction so as to flow to outlet 22. The flow directions in the second channel are analogous. The advantage hereof is based on the insight that sudden changes in direction of the channel or sharp edges or corners in an air channel may result in the production of sound. It is suspected that this is related to an air turbulence generated in the channel. This sound typically causes nuisance in the space. Giving the channels a substantially linear form reduces these problems and increases the comfort of a person in the space. The figures thus show that first channel 20 can comprise a first channel section 20a, a second channel section 20b and a third channel section 30c. The first channel section 20a extends substantially linearly from suction opening 21, from the first channel to the first air inlet 41 of heat exchanger 40. The first channel section 20a extends in downward direction to the heat exchanger accommodation, as elucidated above. Compared to a size of the suction opening, a cross-sectional area of first channel section 20a can be smaller. The large suction opening allows a great deal of air to be drawn in. Although the smaller section of first channel section 20a realizes a flow acceleration in the airflow, it also limits the maximum dimension of the ventilation unit.

The second channel section 20b extends substantially linearly from the first air outlet 43 of heat exchanger 40 to the first air pump accommodation 151. Second channel section 20b extends in downward direction, substantially vertically. Second channel section 20b preferably debouches in the lower segment of the ventilation unit, more preferably at the position of the outlet opening 32 of second channel 30. The oblique orientation of first channel section 20a creates space in a height direction on one hand and in a longitudinal direction of the ventilation unit on the other. This allows a relatively large air pump to be provided, which can function at a lower rotational speed. This has an advantageous effect on the sound produced thereby. The created space further also allows a larger heat exchanger to be provided, compared to existing ventilation units. This is further advantageous for the air speed, because this will be slower in the heat exchanger compared to a smaller heat exchanger and moreover increases the energy efficiency owing to the larger exchange surface. It is noted that the outlet opening of the air pump accommodation can be provided directly in the second wall B. Air pump 51 can for instance blow substantially directly into the space adjacent to the ventilation unit. It is however preferred for a third channel section 20c to be provided in order to initially attenuate the sound produced by the air pump at least partially. The third channel section 20c extends substantially linearly from first air pump accommodation 151 to the first outlet opening 22 of first channel 20. According to a further preferred embodiment, second channel 30 is a mirror image of first channel 20. This is understood to mean that the path travelled by second channel 30 is symmetrical to the first channel. This allows the ventilation unit to be integrated in the reveal both on the left-hand side and the right-hand side of a window. For instance by reversing the ventilation unit. In reversed state the suction opening of the first channel will be situated at the bottom and the outlet opening of the second channel at the top. In this reversed situation the function of the first and the second channel can also be reversed in simple manner in order to realize the same operation of the ventilation unit in a different orientation thereof. Figure 4 thus shows that the second channel 30 has a first channel section 30a, a second channel section 30b and a third channel section 30c. The first channel section 30a, the second channel section 30b and the third channel section 30c of second channel 30 are positioned in mirrored manner relative to a central axis in relation to first channel section 20a, second channel section 20b and third channel section 20c of first channel 20. For the sake of a brief description, it is noted that the advantages of the channel sections of first channel 20 apply mutatis mutandis to the channel sections of second channel 30.

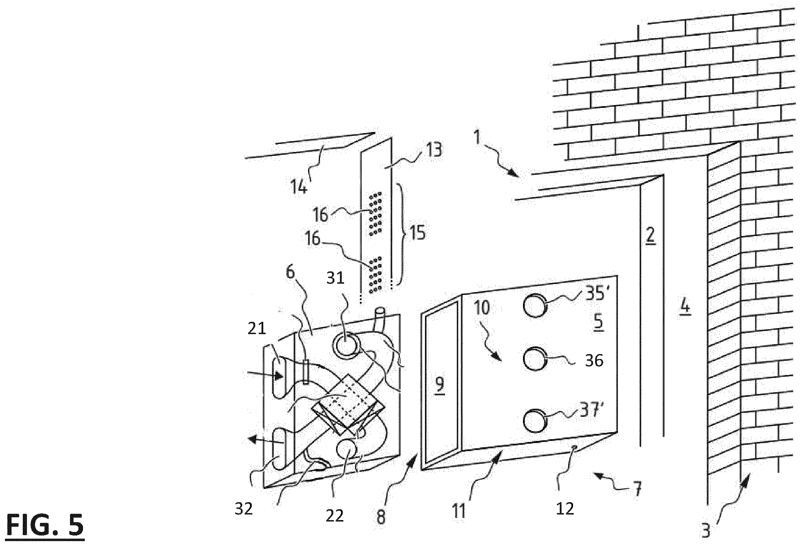

Figure 5 shows a wall 1 of a building in which an opening is provided for fitting a window. Windows are typically provided in order to allow light to shine into a building. A window is an example of a functional opening in a building. Other functional openings comprise doors, gates, sliding windows and other similar openings. Functional openings are therefore typically provided in a wall 1 which has an inner wall 2 adjoining an interior space of the building, and has an outer wall 3 provided on an outer side of the building. In order to limit heat loss a cavity 4 is typically provided between inner wall 2 and outer wall 3. The cavity is defined by a space between inner wall 2 and outer wall 3, this space being filled with air or with an insulating material. A thermal barrier is hereby created between inner wall 2 and outer wall 3 so that energy can be retained in the building. Reference is made in this description to inner wall 2, outer wall 3 and cavity 4, although it will be apparent here that this does not imply a traditional way of building. An outer wall 3 is defined as the outer shell of a building. Inner wall 2 is defined as the elements forming an inner shell of a building, wherein the inner shell is thermally insulated from the outer shell. The cavity 4 is defined as the space and/or the elements thermally separating the inner shell and the outer shell at least partially from each other. The outer wall can be formed from stone, brick metal, wood, plasterwork or other material suitable for forming an outer shell of a building. The cavity can be formed by insulating plates or foam fixedly connected to inner and/or outer wall. The cavity can alternatively be formed by a layer of air. The outer wall 3 is not necessarily self-supporting, and can be structurally connected to the inner wall via the cavity 4.

Recent legislation and modern techniques go a step further than creating a thermal barrier between outer wall 3 and inner wall 2 and also provide an airtight foil or film sheet material in wall 1 with the theoretical purpose of airtight enclosing of the interior space. Because of this airtight foil or film sheet material there is negligible, or at least no uncontrolled and appreciable exchange of air inside the building with air outside the building. This can further limit energy loss. This airtight foil or film sheet material has to be connected to the window when the window is placed in the opening.

It has been known for years to provide window profiles with which windows are constructed with a thermal barrier such that the profiles comprise an outer part and an inner part, wherein the outer part is configured to lie on the outside of the building and the inner part is configured to lie on the inner side of the building. Such window profiles are then mounted either with their outer part against outer wall 3 or with their inner part against inner wall 2. The thermal barrier provided between outer wall 3 and inner wall 2 can hereby be extended to the window. The thermal barrier can in this way take a continuous form so that cold bridges facilitating energy exchange from outside to inside the building, and vice versa, do not occur. It will be apparent here to the skilled person that, if both inner part and outer part of a window are placed on one of an outer wall 3 or inner wall 2, an undesirable heat exchange would be facilitated between either outer wall and inner part of the window profile or inner wall and outer part of the window profile so that a cold bridge occurs. The airtight foil or film sheet material provided in wall 1 is adhered against an edge of the window profile and connects airtightly against the window profile. A building with a window can be energy-optimized by providing a window in an opening of a building while making allowance for the aspects described above.

When an opening is provided in a wall 1, a so-called reveal is also formed. The reveal is defined as a straight, chamfered or profiled inner side of a window opening, gate opening or arch opening, which inner side preferably lies transversely or substantially transversely of the wall. The reveal is preferably always perpendicular to the wall. The reveal shows the thickness of inner wall 2, the thickness of cavity 4 and the thickness of outer wall 3. Figure 5 shows a portion of the upright reveal and a portion of the upper reveal of a window opening.

Figure 5 further shows a ventilation unit 7. The ventilation unit preferably forms part of a ventilation system and allows a forced controlled airflow from inside to outside and from outside to inside through wall 1. A plurality of such ventilation units can be placed in a plurality of respective rooms of a building in order to together form the ventilation system of the building. Because each ventilation unit of the ventilation system operates individually, the ventilation system can be explained in this description by describing the operation of one ventilation unit. It will be apparent here that, while a plurality of ventilation units can operate independently, the skilled person can couple them operationally in order to obtain a predetermined operational interaction between the different ventilation units in the ventilation system.

The ventilation unit of the ventilation system is constructed with a casing 5 and one or more modules which are provided with a heat exchanger for energy exchange between the inflowing and outflowing air. The ventilation system can be deemed a local ventilation system. This is because a plurality of such ventilation units 7 can be provided in a building, for instance at a plurality of window openings in a plurality of rooms of the building, the operation of which is controllable separately of each other.

Figure 5 shows the casing 5 of ventilation unit 7. Casing 5 is formed such that it can be provided fixedly in the cavity of a building. Provided fixedly is understood to mean that the casing 5 cannot be removed without carrying out extensive work. Such extensive work is often at least partly destructive and requires for instance demolition of a part of a wall. Casing 5 is for this purpose provided on an outer side with mounting means. These mounting means are preferably provided at the position of, i.e. in the vicinity of, the first side 8. Casing 5 has a first side 8 which preferably has an upright orientation. In mounted state the first side 8 is oriented parallel to the reveal. The first side 8 is also directed toward the reveal, i.e. of all sides, first side 8 lies closest to the reveal. In practice the first side 8 lies according to a first embodiment as shown in figures 1 and 2 substantially in line with the reveal or the first side 8 lies according to a second embodiment as shown in figures 3-5 parallel to and at a distance from the reveal, wherein the distance is preferably smaller than 15 cm, more preferably smaller than 10 cm. The first side 8 of casing 5 is provided with an opening 9. In the shown embodiment opening 9 extends over substantially the whole first side 8.

Casing 5 has a second side 10 configured to lie parallel to the wall. The second side 10 has a plurality of openings 35' and 37', further elucidated below. Second side 10 preferably lies against the inner wall when the window is mounted in or at the inner wall, and preferably lies against the outer wall when the window is mounted in or at the outer wall. Hereby, one of the first side and second side will in each case face outward and another of the first side and second side will face inward. The casing has a maximum outer dimension, measured transversely of the second side, of 30 cm, preferably 25 cm, more preferably 21 cm, in order to enable the whole casing to be built into the wall. This means that the whole casing is situated between an inner shell and outer shell of the wall after being mounted in the wall.

Casing 5 further has a third side 11 which preferably forms the bottom side of casing 5. The third side 11 has a draining opening 12 for discharging condensation and other water that has entered casing 5.

Casing 5 is preferably beam-shaped. This means that opposite the first side lies a further first side with a surface area substantially equal to that of the first side. Opposite the second and the third side also lie respectively further second and further third sides, these having substantially the same surface areas as respectively the second and third side. The thus obtained beam-shaped casing can be incorporated in a cavity 4 in simple manner. The first side 8 is preferably smaller than the second side 10. First and second side 8 and 10 preferably have an upward orientation. The third side 11 is preferably smaller than the first side 8. The overall depth for functional modules 6 is hereby smaller than the overall height via first side 8. Third side 11 preferably extends in lying orientation as bottom surface.

Figure 5 shows schematically one or more functional modules 6 of a ventilation unit 7. The functional modules 6 can be incorporated in casing 5 via the opening 9 in first side 8. The functional modules 6 can also be dismantled from casing 5 via the opening 9 in first side 8. For the sake of simplicity, figure 5 shows one functional module comprising all functions. The functional modules 6 comprise the first housing part 100 described at length above and the second housing part 200 with therein one or more of the sensors, fans and heat exchanger. Casing 5 is for this purpose formed with dimensions corresponding with a mounted assembly of first housing part 100 and second housing part 200, such that in mounted state the housing parts can be installed in and uninstalled from the casing via first side 8. In mounted state the first side 8 of casing 5 will here substantially coincide with the above described first side A of the housing assembly.

Heat exchanger 24 is of the air-air type, so that a heat exchange is possible between a first and a second airflow. Heat exchanger 24 is configured for this purpose to allow crosswise flow of the airflows relative to each other in a manner such that heat exchange between the flows is optimized. Air-air heat exchangers are known and the details of this heat exchanger are therefore not described in any further detail in this description. The heat exchanger can be configured to exchange only heat, but can also be a so-called recuperator. A recuperator not only exchanges heat, but also recuperates moisture. This is also referred to as an enthalpy heat exchanger.

The second channel 30 starts at a second suction opening 31 provided in a second side of the ventilation unit which, when ventilation unit 7 has been incorporated in the wall, adjoins an interior space of the building. The first outlet opening 22 is configured to allow outflow of air to the space from outside to inside via first channel 20. When the housing assembly is mounted in casing 5, second suction opening 31 is aligned with opening 35' and first outlet opening 22 is aligned with opening 37'.

Ventilation unit 7 further optionally comprises a fifth opening 36 which is preferably formed in the same side as second opening 35 and third opening 37. This fifth opening 36 is optionally positioned (not shown) at the location of a filter for filtering the inflowing outside air. An advantage hereof is that this filter is accessible via the fifth opening 36. Fifth opening 36 is preferably positioned between second opening 35 and third opening 37. As a result of this positioning of the openings, in particular the positioning of fifth opening 36, all filters present in ventilation unit 7, more specifically the filter for filtering the air flowing from inside to outside and the filter provided for filtering the air flowing from outside to inside, can be replaced via inner wall 2. The filter preferably comprises a carbon filter, more preferably an active carbon filter, which cleans incoming air. This makes maintenance of ventilation unit 7 extremely simple.

Figure 5 shows that suction opening 21 and outlet opening 32 are located on a first side A of casing 5 when the housing assembly is incorporated in casing 5.

Figure 5 further shows a reveal finish 13 for the upright reveal and a finish 14 for the upper reveal. When the reveal finish is mounted, a segment of the reveal finish 13 comes to lie in front of the opening 9 in first side 8 of casing 5 and in front of the first side A of the housing assembly. This segment therefore functions as cover 15 for the opening 9 in first side 8. It is particularly when airflow openings of the functional modules 6 open on the first side 8 that the cover 15 is provided with perforations 16 to allow the airflow through cover 15.

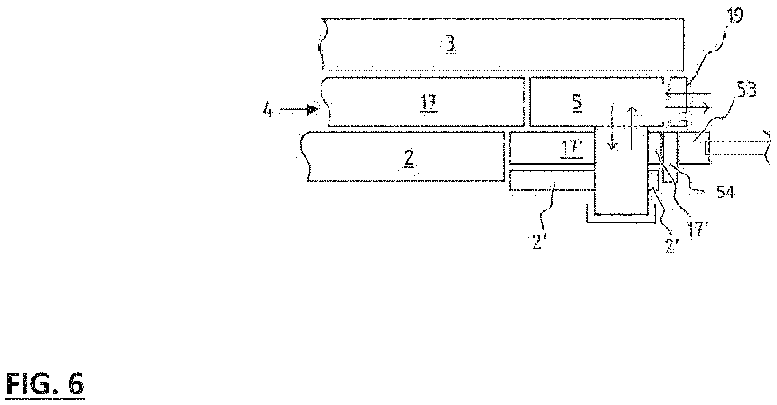

Figure 6 shows a cross-section of a wall at the position of the ventilation unit. Figure 6 thereby shows the above described components including the outer wall 3, the cavity 4 with insulation 17, the inner wall 2, the casing 5 and the lateral guide 19 of a screen device. Figure 6 further shows particularly that, at the position of casing 5, a piece of insulating material 17' is provided between the inner wall 2' and casing 5. The piece of insulating material 17' forms a barrier between casing 5 and inner wall 2. Figure 6 further shows that a window 53 is provided at the position of an inner wall 2. This window 53 is connected via a thermal plate 54 to the inner wall in order to prevent cold bridges. The piece of insulating material 17' and the thermal plate 54 are deemed part of the inner shell of the building since insulating material 17' and thermal plate 54 at least partially define the form and position of the inner wall. In the embodiment as shown in figure 6 the whole casing 5 will therefore also fall between the outer shell 3 and the inner shell 2, 2', 17' and 54. Because the housing assembly is also preferably formed from heat-insulating material, the housing assembly of the ventilation unit will also have an insulating effect.

A piece of insulating material 17' can be provided between casing 5 and inner wall 2 in two ways. The figure shows an embodiment wherein inner wall 2 has been made narrower at the position of the casing so that the piece of insulating material 17' fits between the narrower inner wall and the casing 5 (narrower as seen in a direction transversely of the wall). In this embodiment the casing 5 can be embodied with the same width as cavity 4, as seen in the direction transversely of the wall. In an alternative embodiment casing 5 is narrower than cavity 4 and the difference in width is filled up with the piece of insulating material 17'. There is in any case preferably an overlap of the piece of insulating material 17' and insulating material 17 in order to prevent cold bridges and to obtain a good insulation. A combination of the above described embodiments is of course also possible.

Because the housing assembly is preferably also formed from heat-insulating material, it will also be possible to use the space in the inner wall which is filled up by insulating material 17' in figure 6, this without any appreciable heat-insulating effect, to provide sound-damping components such as a sound trap.

A sound trap with a chamber can alternatively or in combination be provided between casing 5 and inner wall 2'. The chamber forms a channel which is configured to demarcate an airflow between the air inlet and the air outlet and comprises a baffle for preventing a linear airflow between the air inlet and the air outlet, such that a propagation of sound of the air displacing unit through the chamber is damped. The sound trap is configured to facilitate an airflow at least partially through inner wall 2', which airflow flows primarily in a direction transversely of the wall, and wherein between the air inlet and the air outlet the noise trap secondarily makes the airflow travel a distance in multiple directions lying in a plane which lies substantially parallel to the wall, which distance is considerably greater than the straight distance between the air inlet and the air outlet. The sound trap can for instance be provided in the inner wall instead of or in combination with the insulating material 17'. According to a further embodiment, the sound trap can be provided at the position of inner wall 2'.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. A ventilation unit (10) configured to be built into a wall of a building, the ventilation unit comprising a heat exchanger (40) and a housing assembly which comprises a first housing part (100) and a second housing part (200) which are mutually connectable and shape-compatible, wherein the first housing part (100) and the second housing part (200) are configured to each form at least a portion of a first channel (20; 120, 220) for allowing air to flow from outside to inside the building, a second channel (30; 130, 230) for allowing air to flow from inside the building to outside, and a heat exchanger accommodation (140, 240) configured to accommodate the heat exchanger (40), wherein the first channel (20) and the second channel (30) extend between the first and the second housing part (100, 200) from respectively a suction opening (21, 31) to an outlet opening (22, 32), the ventilation unit further comprising a first air pump (51) in the first channel and a second air pump (52) in the second channel, and wherein the first housing part comprises a first air pump accommodation (151) and a second air pump accommodation (152) which are configured to accommodate respectively the first air pump and the second air pump, wherein the suction opening (21, 31) and the outlet opening (22, 32) of the first channel and the second channel are positioned as follows:
the outlet opening (22; 222) of the first channel (20) is provided in a lower segment of the ventilation unit (10), and the suction opening (31; 231) of the second channel (30) is provided in an upper segment of the ventilation unit and the suction opening (21) of the first channel is provided at the position of an upper segment of the ventilation unit, and the outlet opening 32 of the second channel is provided at the position of a lower segment of the ventilation unit.

2. The ventilation unit (10) according to the foregoing claim, wherein the first housing part (100) and the second housing part (200) each form on a first side (A) a portion (121; 221) of the suction opening (21) of the first channel and a portion (132; 232) of the outlet opening (32) of the second channel, such that the suction opening and outlet opening are wholly formed when the first housing part and the second housing part are connected to each other.

3. The ventilation unit (10) according to any one of the foregoing claims, wherein at least one of the first and the second housing part comprises a recess in a lower wall of the second channel, at the position of the outlet opening (132, 232), so that when the first and the second housing part are mutually connected, a condensation discharge channel (270) is formed in the lower wall by the recess.

4. The ventilation unit (10) according to any one of the foregoing claims, wherein the second housing part (200) comprises the outlet opening (22; 222) of the first channel (20) and the suction opening (31; 231) of the second channel (30).

5. The ventilation unit (10) according to any one of the foregoing claims, wherein the first channel (20) extends substantially linearly between the first air pump accommodation (151) and the outlet opening (22) of the first channel (20); and wherein the second channel (30) extends substantially linearly between the second air pump accommodation (152) and the suction opening (31; 231) of the second channel (30).

6. The ventilation unit (10) according to any one of the foregoing claims, wherein the first channel and the second channel are functionally separated from each other by the first housing part, the second housing part and the heat exchanger when the first housing part and the second housing part are mutually connected.

7. The ventilation unit (10) according to any one of the foregoing claims, further comprising a casing which is configured to accommodate the first housing part and the second housing part.

8. The ventilation unit (10) according to any one of the foregoing claims, wherein each of the first housing part and the second housing part are respectively integrally formed, preferably from a hard foam material such as EPP.

9. The ventilation unit (10) according to any one of the foregoing claims, wherein the first housing part and/or the second housing part are configured to comprise one or more sensors which are able to measure a parameter associated with the air.

10. The ventilation unit (10) according to any one of the foregoing claims, further comprising a grating for allowing an airflow from and to the ventilation unit and to prevent torrential rain from entering directly into the housing assembly.

11. The ventilation unit (10) according to the foregoing claim, wherein the grating comprises throughfeed channels which are arranged in the grating, wherein the throughfeed channels preferably each have a hexagonal cross-section, wherein a surface area of each of the plurality of throughfeed channels is preferably a minimum of 1.0 mm².

12. The ventilation unit (10) according to the foregoing claim, wherein the plurality of throughfeed channels have a length with a longitudinal direction extending at an angle relative to a frontal plane of the grating.

13. The ventilation unit (10) according to the foregoing claim, wherein the angle is at least 15°, preferably at least 20°, more preferably at least 30°, for instance 35°, and wherein the angle is a maximum of 50°, preferably a maximum of 45°, more preferably a maximum of 40°, for instance 35°.

14. The ventilation unit (10) according to any one of the claims 23-28, wherein the grating is provided at least at the position of the suction opening of the first channel.

15. Assembly of a screen device and a ventilation unit according to any one of the foregoing claims, wherein the screen device comprises a screen roller and a screen which is rollable onto and unrollable from this screen roller and is attached to the screen roller on one of its sides, wherein the screen device comprises at least a protective casing and two lateral guides, wherein the ventilation unit is connected to a first lateral guide of the two lateral guides.
